# EUROPEAN PATENT APPLICATION

(11) **EP 2 540 545 A1**
(43) Date of publication of application: **02.01.2013**
(21) Application number: 11461524.8
(22) Date of filing: 28.06.2011
(51) Int. Cl.: B60K 11/04, F28F 9/00

(54) **Bracket for heat exchanger side plate**

(71) Applicant: VALEO AUTOSYSTEMY Sp. Z. o.o., 32-050 Skawina (PL)
(72) Inventor: Rod, Janusz, PL-32 050 Skawina (PL); Las, Piotr, PL-32 050 Skawina (PL)
(74) Representative: Slominska-Dziubek, Anna

(57) **Abstract**

Bracket for fixing a heat exchanger (10) in an automotive vehicle, said bracket (20) being characterized in that it is configured for being inserted into a slot (18) of a heat exchanger side plate (16).

## Description

The invention relates to a heat exchanger for an automotive vehicle and more specifically a side plate and a bracket of such a heat exchanger.

An automotive vehicle may comprise an engine with a cylinder head, a turbo-compressor and a heat exchanger. A known type of heat exchanger, called charge air cooler, allows for cooling some compressed air provided to the turbo-compressor for charging the engine through the cylinder head.

A known type of charge air cooler uses air from the outside of the vehicle in order to cool down the compressed air. Such a heat exchanger is usually located at the front of the vehicle just behind the radiator grill so as to gather a maximum of air from the outside. In such a case, the heat exchanger may be fixed to the structure of the vehicle or to another element of the vehicle, such as for example another heat exchanger, using a bracket.

In some other kind of heat exchangers, a bracket is sometimes mounted directly on a lateral side, which takes the form of a side plate, of the heat exchanger, stretching on the whole width of said side plate, in order to support the heat exchanger and to allow the fixing of the heat exchanger to a part of the vehicle. Known brackets used in automotive vehicles are usually aluminum brazed, plastic riveted or plastic clicked on said lateral side.

A problem with existing brackets is that the length of the bracket should be substantially of the width of the side plate of the heat exchanger in order to be mounted on the heat exchanger. This implies that a different type of bracket must be manufactured for each type of heat exchanger, according to the width of the side plate of the heat exchanger.

Another drawback is that the mounting process by brazing or clipping may prove to be complex and fastidious, especially for large heat exchangers.

The invention aims at eliminating, at least partially, the drawbacks of the prior art. The invention concerns thus a bracket for fixing a heat exchanger in an automotive vehicle, said bracket being characterized in that it is configured for being inserted into a slot of a heat exchanger side plate.

By side plate, it is meant a plate located on a side of a core of the heat exchanger, especially for cores of the tubes and fins type, the plate being then located on the external tube or fin of the core.

Such a bracket may be used for fixing heat exchangers of any width. Moreover, such a bracket is easy to mount on a heat exchanger.

According to an embodiment, the bracket is configured for being hold in the slot of the heat exchanger side plate by clipping. Such a bracket does not require additional fixing elements like rivets or screws, is easy to mount and is easily replaceable.

According to an aspect of the present invention, the bracket comprises fixing means in the shape of at least one elastic clip arranged for being received by a fixing means of the heat exchanger side plate.

According to another aspect of the present invention, the bracket comprises fixing means in the shape of at least one hook arranged for being received by a fixing means of the heat exchanger side plate.

According to another aspect of the present invention, the bracket comprises fixing means in the shape of a guiding tab arranged for being inserted into a groove of the side plate to block the bracket into said groove.

According to an embodiment of the present invention, the bracket comprises an opening arranged for being received by fixing means of an automotive vehicle or of another heat exchanger.

According to an embodiment, the bracket is configured for being hold in the slot of the heat exchanger side plate by reciprocal engagement. Therefore, such a bracket does not require additional fixing elements like rivets or screws, is easy to mount and is easily replaceable.

According to an aspect of the present invention, the bracket is made of plastic. It is thus easy to manufacture.

The invention also concerns a side plate for a heat exchanger of an automotive vehicle, said side plate being arranged for being mounted on a side of a heat exchanger and comprising a slot configured for receiving a bracket, as defined here above, for fixing the heat exchanger in an automotive vehicle.

According to an aspect of the present invention, the slot is defined in the side plate material and the side plate comprises, on the outline of the defined slot, fixing means for blocking the bracket into the slot.

According to another aspect of the present invention, the side plate further comprises a groove having a base and first and second lateral sides extending from a side plate body to the groove base, said groove being arranged for receiving a guiding tab of said bracket, and in which side plate said slot is connected to and opens the groove on a longitudinal side of the side plate through said first lateral side of the groove, said slot being defined by slot walls and a slot baffle, said slot baffle being arranged for receiving a hook of the bracket, wherein:
- a first slot wall extends from the side plate body to the groove base level,
- a second slot wall extends at a groove base level between said first slot wall and the slot baffle,
- a third slot wall extends at a side plate body level from said slot baffle to said side plate body,
- the second lateral side of the groove is provided with a slit arranged for receiving an elastic clip of the bracket.

According to an embodiment, the side plate is made of metal. It is thus brazed to the heat exchanger and the part of the side plate defining the fixing means will be strong enough to support the weight of the heat exchanger and to receive a bracket as defined here above.

The invention also concerns a heat exchanger of an automotive vehicle, said heat exchanger being characterized in that it comprises a bracket as defined here above and a side plate provided with a slot for receiving said bracket.

According to an aspect of the present invention, the heat exchanger comprises a core having two lateral sides, said core being made of tubes and fins superimposed between the two lateral sides, at least one of said lateral side being provided by a side plate, the bracket being mounted substantially between the side plate and said core.

The invention also concerns a method of mounting a heat exchanger of an automotive vehicle, said heat exchanger comprising a bracket as defined here above, a side plate provided with a slot for receiving said bracket and a core having two lateral sides, said core being made of tubes and fins superimposed between the two lateral sides, at least one of said lateral side being provided by said side plate, said bracket comprising fixing means, said heat exchanger side plate comprising fixing means for receiving the fixing means of the bracket, said method comprising the steps of:
a) brazing the side plate together with the core of the heat exchanger,
b) inserting the bracket into the slot,
c) sliding the bracket into the slot until the fixing means of the bracket are engaged with the fixing means of the heat exchanger side plate.

The invention will now be solely described by ways of figures, in which drawings are given as non-limiting examples (identical references being given to similar objects), and wherein:
- figure 1 illustrates a partial view in perspective of a heat exchanger comprising a bracket according to the invention,
- figure 2 is a cut view illustrating a bracket inserted into a slot of a heat exchanger side plate,
- figure 3 illustrates a view in perspective of the bracket of figure 2,
- figure 4 illustrates a partial view in perspective of the bracket of figure 2 which has been slid in order to be mounted in the slot of the heat exchanger side plate.

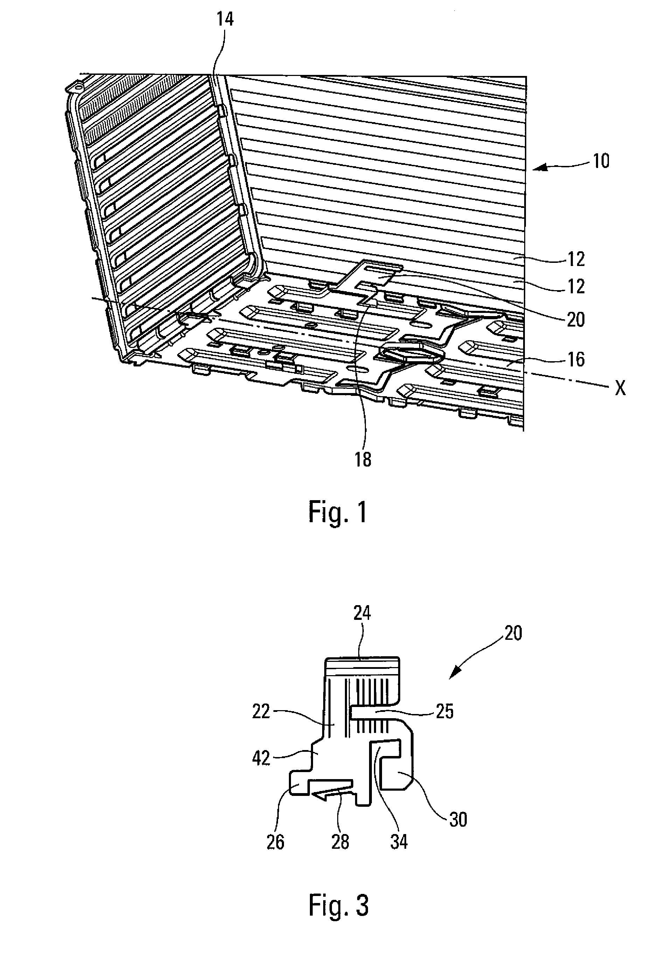

Figure 1 illustrates the core 10 of a heat exchanger for an automotive vehicle, here a charge air cooler. The heat exchanger is intended to be mounted on fixing means of the vehicle, located either directly on the body in white of the vehicle or on another element of the vehicle such as, for example, another heat exchanger (e.g. an engine cooling radiator).

Such a heat exchanger core 10 comprises a plurality of tubes 12 connected and superimposed in order to form a circulation channel for the fluid to be cooled down. Such tubes 12 are spaced by fins so that air may circulate between them. This air allows cooling the fluid such as, for example, supercharged air, circulating inside the tubes 12.

Tubes 12 are hold by two collecting plates 14 disposed on two opposite lateral sides of the heat exchanger core 10 (only one of the collecting plates 14 is illustrated on figure 1).

A side plate 16 is fixed on the bottom and/or top side of the heat exchanger core 10, connecting the collecting plates 14 and closing, at least partially, the bottom and/or top side of the heat exchanger core 10. The side plate 16 takes here the form of a substantially rectangular metallic plate stretching along a longitudinal axis X corresponding to the longitudinal axis of the tubes 12.

The side plate 16 defines at least one slot or opening 18 arranged for receiving a bracket 20. In other words, the outline of the slot 18 is at least partially defined by the side plate 16. Once received, as illustrated by figure 1, the bracket 20 is mounted substantially between the side plate 16 and the external fin of the core 10.

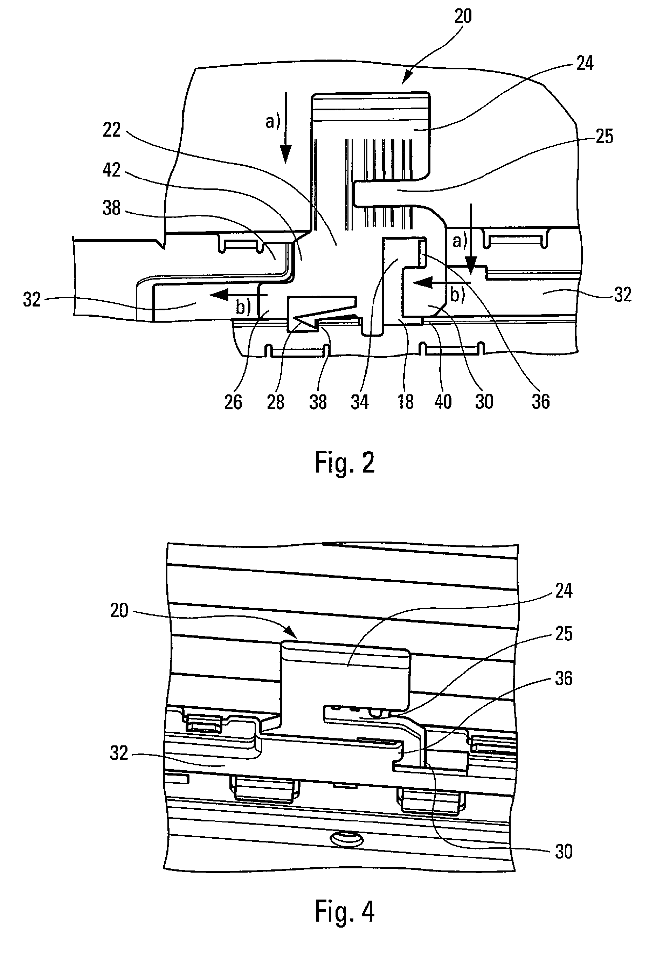

As can be seen on figure 2, the side plate 16 comprises :
- a groove 32 of a U-shaped transversal section, comprising a base and two lateral sides extending from the side plate body to the groove base and defining an aisle facing the slot 18,
- a slot 18 connected to and opening the groove 32 on the longitudinal side of the side plate 16, said slot 18 being defined by slot walls and a slot baffle 36, wherein:
   - a first wall extends from the side plate body to the groove level,
   - a second wall extends at the groove base level between said first slot wall and the slot baffle 36,
   - a third slot wall extending at side plate body level from said slot baffle to said side plate body.

The side plate 16 comprises thus an open part wherein a fixing means of the bracket 20 may contact the slot baffle 6 and a closed part wherein another fixing means of the bracket 20 may contact the groove 32 as described hereunder.

The longitudinal axis of the groove 32 may be parallel to the longitudinal axis X of the tubes 12 of the heat exchanger 10.

As illustrated on figure 3, the bracket 20 takes the form of a substantially plane and elongated key comprising:
- a central area 22,
- stretching from one part of the central area 22, a support part 24, configured for being fixed on the fixing means of the automotive vehicle mentioned here above,
- stretching from another part of the central area 22, a plurality of fixing elements 26, 28, 30 configured for maintaining the bracket 20 into the slot 18 of the side plate 16.

The support part 24 takes a U-shape around a opening 25 arranged for receiving a fixing means, such as e.g. a complementary U-shaped bit (not represented) of the vehicle or another element of the vehicle, such as for example another heat exchanger.

A first fixing element 26 is defined by a guiding tab arranged for being inserted into the groove 32 to block the bracket 20 into said groove 32 as illustrated by figures 3 and 4 here under.

A second fixing element 28 takes the form of a clip that may be mounted on/in a fixing means of the side plate 16, such as for example a shoulder 38 (in reference to Figure 3) or a hole (not represented). The shoulder 38 is defined by a slit, provided in the aisle of the groove facing the slot 18, such side plate 16 and such bracket 20 being arranged so that the clip 28 engages on the shoulder 38 in said slit.

A third fixing element 30 takes the form of a hook. In other words, the fixing element 30 takes a U-shape around a L-shape opening 34 arranged for receiving a fixing means of the side plate 16, being arranged for blocking the fixing element 30 of the bracket 20 when the bracket 20 is mounted into the slot 18. The fixing means of the side plate are here defined by the slot baffle 36.

Once inserted into the groove 32, the guiding tab 26 is in contact with the lateral side of the groove 32 while a shoulder 42 of the bracket 20 is in contact with the first slot wall of the side plate 16. Simultaneously, the hook 30 is in contact with an edge of the slot baffle 36 and the lateral side of the groove 32 facing the slot 18.

The bracket 20 is therefore blocked into the groove 32 in several locations, allowing mounting solidly the bracket 20 onto the side plate 16.

More precisely, the bracket 20 is blocked into the groove 32 in one direction parallel to the longitudinal axis of the groove 32 through the shoulder 42 and the first slot wall.

The clip 28, in contact with the shoulder 38 of the groove 32, allows holding the bracket 20 in the opposite direction, inducing a locking effect so that the bracket 20 is blocked in both direction of the longitudinal axis.

The bracket 20 is also blocked in the side plate 18 in a direction perpendicular to the longitudinal axis of the side plate thanks to the guiding tab 26 and the hook 30 through their cooperation with the lateral side of the groove 32 and/or the slot baffle 36.

The bracket 20 may be made of plastic, carbon composite or metal.

The heat exchanger core and the side plate are first brazed together and the bracket is inserted in the side plate afterwards.

Figures 3 and 4 also illustrate the mounting process of the bracket 20 in the slot 18 defined in the side plate 16.

In a first step a), the bracket 20 is inserted into the slot 18 of the side plate 16 in the direction perpendicular to the longitudinal axis X of the side plate 16. More specifically, the guiding tab 26 and the clip 28 are inserted in a closed part of the slot 18, provided between the first slot wall and the slot baffle, while the hook 30 is inserted into an open part of the slot 18, provided on the other side of the slot baffle.

The support part 24 remains outside the slot 18 so that it may further be fixed to the fixing elements of the vehicle.

In a second step b), the bracket 20 is slid in the slot 18 in a direction parallel to the longitudinal axis X of the side plate 16 until:
- the guiding tab 26 is blocked in the groove 32,
- the clip 28 is blocked in the slit defined by the shoulder 38 formed in the side plate 16, and
- the hook 30 is blocked between the slot baffle 36 and a shoulder 40 formed in the side plate 16 and extending in the groove aisle facing the slot.

In another embodiment, the bracket may take the form of a substantially rectangular plate and the slot of the side plate may take the form of a substantially rectangular slot arranged for receiving the rectangular-shaped bracket.

In an embodiment, the bracket may be inserted into the slot by force so that the bracket remains mounted in the slot by friction.

## Claims

1. Bracket for fixing a heat exchanger (10) in an automotive vehicle, said bracket (20) being **characterized in that** it is configured for being inserted into a slot (18) of a heat exchanger side plate (16).

2. Bracket according to claim 1, said bracket (20) being configured for being hold in the slot (18) of the heat exchanger side plate (16) by clipping.

3. Bracket according to any of the preceding claims, said bracket (20) comprising fixing means in the shape of at least one elastic clip (28) arranged for being received by a fixing means (38) of the heat exchanger side plate (16).

4. Bracket according to any of the preceding claims, said bracket (20) comprising fixing means in the shape of at least one hook (30) arranged for being received by a fixing means (36) of the heat exchanger side plate.

5. Bracket according to any of the preceding claims, said bracket comprising fixing means in the shape of a guiding tab (26) arranged for being inserted into a groove (32) of the side plate (16) to block the bracket (20) into said groove (32).

6. Bracket according to any of the preceding claims, said bracket (20) comprising an opening (25) arranged for being received by fixing means of an automotive vehicle or of another heat exchanger.

7. Bracket according to any of the preceding claims, said bracket (20) being configured for being hold in the slot (18) of the heat exchanger side plate (16) by reciprocal engagement.

8. Bracket according to any of the preceding claims, said bracket (20) being made of plastic.

9. Side plate for a heat exchanger of an automotive vehicle, said side plate (16) being arranged for being mounted on a side of a heat exchanger (1) and comprising a slot (18) configured for receiving a bracket (20), according to any one of the preceding claims, for fixing the heat exchanger (10) in an automotive vehicle.

10. Side plate according to claim 9, wherein the slot (18) is defined in the side plate material and the side plate (16) comprises, on the outline of the defined slot (18), fixing means (32, 36, 38, 40) for blocking the bracket (20) into the slot (18).

11. Side plate according to any of one of claims 9 and 10, said side plate further comprising a groove comprising a base and first and second lateral sides extending from a side plate body to the groove base, said groove being arranged for receiving a guiding tab of said bracket, and in which side plate said slot is connected to and opens the groove on a longitudinal side of the side plate through said first lateral side of the groove, said slot being defined by slot walls and a slot baffle, said slot baffle being arranged for receiving a hook of the bracket, wherein:
- a first slot wall extends from the side plate body to the groove base level,
- a second slot wall extends at a groove base level between said first slot wall and the slot baffle,
- a third slot wall extends at a side plate body level from said slot baffle to said side plate body,
- the second lateral side of the groove is provided with a slit arranged for receiving an elastic clip of the bracket.

12. Heat exchanger of an automotive vehicle, said heat exchanger (10) being **characterized in that** it comprises a bracket (20), according to any one of claims 1 to 8, and a side plate (16), according to any one of claims 9 to 11, provided with a slot (18) for receiving said bracket (20).

13. Heat exchanger according to claim 12, said heat exchanger (10) comprising a core having two lateral sides, said core being made of tubes (12) and fins superimposed between the two lateral sides, at least one of said lateral side being provided by a side plate (16), the bracket (20) being mounted substantially between the side plate (16) and said core.

14. Method of mounting a heat exchanger of an automotive vehicle, said heat exchanger (10) comprising a bracket (20) according to any one of claims 1 to 8, a side plate (16), according to any one of claims 9 to 11, provided with a slot (18) for receiving said bracket (20) and a core having two lateral sides, said core being made of tubes (12) and fins superimposed between the two lateral sides, at least one of said lateral side being provided by said side plate (16), said bracket (20) comprising fixing means (26, 28, 30), said heat exchanger side plate (16) comprising fixing means (32, 36, 38, 40) for receiving the fixing means (26, 28, 30) of the bracket (20), said method comprising the steps of:
a) brazing the side plate (16) together with the core of the heat exchanger (10),
b) inserting the bracket (20) into the slot (18),
c) sliding the bracket (20) into the slot (18) until the fixing means (26, 28, 30) of the bracket (20) are engaged with the fixing means (32, 36, 38, 40) of the heat exchanger side plate (16).
